# EUROPEAN PATENT APPLICATION

(11) **EP 4 681 536 A1**
(43) Date of publication of application: **21.01.2026**
(21) Application number: 24382774.8
(22) Date of filing: 17.07.2024
(51) Int. Cl.: A01N 63/14, A01P 5/00

(54) **AGRICULTURAL COMPOSITION, USE AND METHOD FOR ITS PRODUCTION**

(71) Applicant: Innolarva, SCCL, 08302 Mataró Barcelona (ES)
(72) Inventor: Sàbat Alejandre, Rosa Maria, 08302 MATARÓ (ES); Ariño Armengol, Jordi, 08302 MATARO (ES)
(74) Representative: Pons IP

(57) **Abstract**

The present invention refers to a method for obtaining an agricultural composition that comprises adding fly larvae to a plant material, allowing the digestion of the plant material by the fly larvae and crushing the fly larvae together with the digested plant material. The invention also relates to an agricultural composition of biological origin and its use as a pesticide for the control of nematodes in plants.

## Description

The invention relates to an agricultural composition having phytosanitary activity, the use of said composition in agriculture and a method for obtaining said composition from organic materials and fly larvae. Therefore, the present invention is within the biotechnology field, more particularly, the present invention is within the agricultural biotechnology.

### BACKGROUND ART

The world population has been increased significantly in last century what translates in a proportional increase of the demand of resources to supply their necessities. Food is one of the key resources whose production has experienced an increase in the recent years, with agriculture having an essential role. The agricultural production needs to be increased every year, what translates into the development of new techniques comprising the use of fertilizers and phytosanitary products that promote the growth of plants and the control of pests respectively.

Among the widely used strategies to improve agricultural production are the strategies based on the use of chemical phytosanitary and fertilizers compounds (agrochemicals). However, the use of agrochemicals has negative effects that can affect the environment in which they are used as they are persistent in the environment and can be toxic not only to other plant species in the environment, but also to the consumers of food from the crops in which they are used (Carvalho, F. P. (2006). Environmental science & policy, 9(7-8), 685-692).

As a result, there is an increasing need to implement sustainable agricultural strategies that are more environmentally friendly and adapted to the climate change situation, while at the same time meeting the demands of a growing population (Velten, S., Leventon, J., Jager, N., & Newig, J. (2015). Sustainability, 7(6), 7833-7865).

In this regard, one field that has been extensively studied in the recent years has been the use of insects for alimentary purposes and the use of insect by-products in agriculture. Specifically, when breeding insects, they produce excreta that is not discarded because it may be used as a fertilizer, due to its great nutritional contribution to soils being a sustainable alternative to chemical fertilizers (Poveda, J. (2021). Agronomy for Sustainable Development, 41(1), 5).

However, there is not only a necessity of providing new sustainable compositions for fertilizing purposes, but another problem also to solve is the provision of phytosanitary compositions for the control of pests in agriculture. Specially, phytoparasitic nematodes negatively affect the yield of crops and can cause yearly losses of between 11 and 14% in economically important crops such as legume vegetable or fruit crops, among others. Therefore, the prior art also provides sustainable and environmentally respectful phytosanitary compositions for fighting nematodes pests, wherein the strategies are mainly focused on the use of biologically active microorganisms or organic compounds.

The document ES2789924B2 discloses a nematicide composition that includes as active ingredients kinamic aldehyde and terpenic alcohol, as a nematicide in a phytosanitary treatment especially in crops of banana, bananas, table grapes and vinification, fruit trees, citrus, strawberries, soya. The invention presented brings the main advantages of high efficacy against nematodes, great stability in time, and very low toxicity of the composition, both for plants and for humans.

The document ES2819425T3 describes a microorganism called *Ensifer adhaerens* that has nematicide properties against nematodes of the genus *Meloidogyne.* Specific strains of this microorganism are provided, as well as mutants that retain its nematic capacity. Procedures for obtaining pure crops of this microorganism, as well as biomass, are also detailed. It is proposed to use this microorganism, its pure crops, or its biomass as a plant protection product for the biological control of *Meloidogyne* nematodes. In addition, the application of these products is suggested to prevent plant infection by nematodes or to treat plants already infected by these organisms.

The document ES2819255T3 describes a microorganism, *Lysobacter enzymogenes* strain MR B25, or its mutants with nematicide activity against *Meloidogyne javanica* and ability to promote plant growth in plants of the family Solanaceae. Methods for obtaining pure crops and biomass from this microorganism are detailed, as well as their use in plant protection products, supplemented seeds and methods for biologically controlling nematodes, preventing infections in plants, treating infected plants and stimulating plant growth.

Thus, in view of the progressive growing of the requirements regarding the increase of agricultural production, there is a need in the prior art to provide agricultural compositions that can be used for phytosanitary purposes in an ecofriendly way guided by a sustainable approach.

### DESCRIPTION OF THE INVENTION

The present inventors have developed a new method producing an active agricultural composition starting from organic material and fly larvae. The method herein described is characterized in that the fly larvae are kept together with organic plant material to allow the digestion of the plant material, but at the end of the digestion period, the fly larvae are crushed with the rest of the composition resulting from the digestion. It therefore differs from the prior art in that the fly larvae are not separated from the organic material after the digestion. The fact that the fly larvae are crushed together with the organic material results in the variation of the composition of the final product obtained, that also comprises the molecules and nutrients coming from the bodies of the fly larvae.

The product resulting of the method of the present invention shows characteristics that make it useful in the agriculture field. Advantageously, the composition provided by the present inventors showed the beneficial effects on the control of plant pests, more specifically showed a marked nematicide activity.

Therefore, the present inventors have developed a new method that allows to produce an agricultural composition having phytosanitary activity, wherein said composition is obtained from biological material thus being a more ecofriendly and more socially accepted alternative to agrochemicals. Moreover, the method of the present inventors is considered as a new strategy that can be implemented to prompt circular economy of organic residues, leading to a more sustainable society.

Thus, a first aspect of the present invention refers to a method for obtaining an agricultural composition, hereinafter "the obtention method of the invention", that comprises the following steps:
a) Adding fly larvae to a plant material,
b) Allowing the digestion of the plant material by the fly larvae of step a), and
c) Crushing the product resulting from step b).

In the present invention, the term "agricultural composition" refers to a composition suitable for being used in agriculture, wherein said composition comprises molecules and/or nutrients that exert any beneficial effect for the correct development of a plant and/or to protect a plant from external stresses such as pests.

One of the advantages of the obtention method of the invention is that the starting materials used are biological materials, resulting in an agricultural composition that is more respectful with the environment compared to agrochemicals. Specifically, the step a) of the obtention method of the invention comprises adding fly larvae to a plant material, which means that fly larvae and the plant material are put together.

Preferably, the step a) of the obtention method of the invention comprises gently mixing the fly larvae and the plant material together to homogenize the distribution of the fly larvae.

In the present invention, the term "fly" refers to an insect belonging to the order diptera, and the term "fly larvae" refers to flies that are in the larval development stage; preferably the larval stage comprises from the fly egg hatching to when the larvae reach the prepupal or pupal stage, before they become adult flies. Fly larvae have the shape of a maggot having a soft body.

In a preferred embodiment of the obtention method of the invention, the fly larvae belong to the genus *Hermetia,* more preferably belong to *Hermetia illucens* also known as black soldier fly.

During the growth process, fly larvae need to be supplied with nutrients for the development of new tissues and anatomical structures, and in this respect, they are often found in organic materials or substrates on which they feed, for example plant material comprising plant wastes.

The obtention method of the invention comprises adding fly larvae to a plant material that acts as a substrate where fly larvae develop and from which they extract and digest nutrients.

In the present invention, the term "plant material" refers to an organic material (i.e. organic plant material) of a plant that comprises a tissue or a combination of tissues of a plant or different plants. The plant material may be a whole plant or a part of a plant such as, but not limited to, leaves, flowers, fruits, seeds, roots, products derived from fruits such as peels, fruit pulp, or fiber.

Interestingly, the obtention method of the invention allows to recycle and reuse plant wastes that are produced in human activities contributing to the circular economy of that wastes.

In another preferred embodiment of the obtention method of the invention, the plant material is selected from agricultural plant wastes, horticultural plant wastes, food plant wastes, pruning plant wastes or any combination thereof.

In another preferred embodiment of the obtention method of the invention, the fly larvae are added to the plant material at a proportion from 5g/kg to 15 g/kg (grams of fly larvae / kilograms of plant material), more preferably 10g/kg.

Before the step a), the obtention method of the invention optionally comprises crushing the plant material before adding the fly larvae.

After step a), the obtention method of the invention comprises step b) that comprises allowing the digestion of the plant material by the fly larvae of step a).

During the step b) the fly larvae are kept together with the plant material at suitable conditions, so that fly larvae are preserved alive and can digest the plant material, thus converting it into a material useful in agriculture. During the digestion process, the fly larvae also produce frass that is also comprised in the final agricultural composition. Larvae frass provides the agricultural composition produced by the obtention method of the invention with nutrients such nitrogen or phosphorus.

In the present invention the term "digestion" or "biodigestion", used interchangeably, refers to the biological process by which fly larvae ingest the plant material to break it down into biomolecules that the body can use for energy, tissue growth and tissue repair. The material that is not digested or used by the fly larvae (for energy, tissue growth and tissue repair) is excreted in the form of frass.

The step b) of the obtention method of the invention is carried out at a temperature and for the time that allows the digestion of plant material by the fly larvae; preferably, the step b) is carried out until the fly larvae reach the prepupal or pupal stage. In the present invention the terms "pupal stage" and "prepupal stage" have the common meaning known by the skilled person.

In a preferred embodiment of the obtention method of the invention, the step b) is carried out at least at 25°C, more preferably at a temperature from 28°C to 35°C.

In another preferred embodiment of the obtention method of the invention, the step b) is carried out for at least 5 days, more preferably is preferably carried out for 7 to 12 days.

During the step b) of the obtention method of the invention, the mixture may be stirred to enable homogenization of the digestion of the plant material by the fly larvae and for a correct aeration.

The step b) of the obtention method of the invention may be carried out in a container suitable for maintaining the conditions for the digestion of the plant materials by the fly larvae. Preferably the step b) of the obtention method of the invention is carried out in a biodigestor.

Once the digestion is completed, the resulting product of step b) is then crushed to obtain the agricultural composition. The crushing step comprises reducing the size of the particles of the resulting mixture after step b). The resulting agricultural composition is a biological product free of agrochemicals that comprises the plant material digested by the fly larvae together with the bodies of the fly larvae and their feces (frass) everything crushed together.

The crushing step c) of the obtention method of the invention may be carried out by any method or technique commonly known for the skilled person, such as mechanical crushing using blades, a rotor with blades or a crusher.

In another preferred embodiment, the step c) of the obtention method of the invention further comprises micronizing after crushing. When micronizing after the crushing, the particle size is reduced even more in order to obtain predetermined particle size; preferably wherein the particle size is lower than 200µm, more preferably less than 100µm.

The micronizing in the step c) of the obtention method of the invention may be carried out by any method or technique commonly known for the skilled person, such as, but not limited to, spray drying or milling.

In another preferred embodiment, the step c) of the obtention method of the invention comprises crushing and micronizing until the particle size is less than 100µm.

In the present invention, the term "particle size" refers to the major axis length of a given particle; preferably the particle size in the present invention is determined by using the technique of dynamic image analysis from stroboscopy.

After step c), the final particle size of the resulting agricultural composition allows it to mix it with water and administer it to a plant by drip irrigation (drop by drop), since the particles are able to pass through the holes of the system to water the plant, this allows a more efficient administration and saving of water.

Therefore, in another preferred embodiment, the obtention method of the invention further comprises a step d) of adding water to the product of step c), so that the agricultural composition can be administered by drip irrigation.

It is necessary that the compositions that are going to be administered to a plant, comprise a suitable electrical conductivity for the correct absorption of nutrients. The suitable electrical conductivity of a composition administered to a plant is less than 15 15 mS/cm, preferably from 1 mS/cm to 10mS/cm.

In another preferred embodiment, the obtention method of the invention further comprises a step d) of adding water to the product of step c) until the electrical conductivity is lower than 15 mS/cm, more preferably from 1 mS/cm to 10 mS/cm, preferably 2.5 mS/cm. In the present invention the electrical conductivity is measured at 25°C using a conductometer.

In another preferred embodiment of the obtention method of the invention, water is addend during the micronization, preferably the water is added until a desired electrical conductivity is obtained; more preferably until the electrical conductivity is lower than 15 mS/cm, more preferably from 1 mS/cm to 10 mS/cm and more preferably 2.5 mS/cm.

In view of the assays performed by the inventors, the composition resulting from the obtention method of the invention comprises special characteristics for its use in agriculture, preferably for its use as a biological pesticide or as a phytosanitary composition. More specifically, the agricultural composition resulting from the obtention method of the invention showed a significant effect against plant pathogenic organisms.

Thus, in another aspect the invention relates to an agricultural composition, hereinafter the "agricultural composition of the invention" obtained by the obtention method of the invention.

Because of not separating the fly larvae after the digestion step, and crushing them with the digested plant material, the agricultural composition comprises glucosamine.

As used herein, the term "glucosamine" refers to an amino monosaccharide. In preferred embodiments it is the sugar residue that may form the backbone of the biopolymers chitin and chitosan.

Moreover, the agricultural composition resulting from the obtention method of the invention further comprises other relevant components for the plant nutrition such as protein, nitrogen, phosphorus, potassium, calcium and magnesium.

Thus, in a preferred embodiment, the agricultural composition of the invention is characterized in that comprises at least 2% by weight of glucosamine with respect to the total weight of the composition.

In the present invention, the amount of glucosamine may be determined by LC-MS/MS, preferably wherein the sample is hydrolysed under acidic conditions before de determination using LC-MS/MS.

The present inventors observed an improved phytosanitary effect of the agricultural composition of the invention in comparison to a composition having a lower amount of glucosamine (see examples).

In another preferred embodiment, the composition of the invention is characterized in that comprises from 2% to 5% by weight of glucosamine, more preferably from 2% to 3% by weight of glucosamine with respect to the total weight of the composition.

According to the experiment results, the composition provided by the present invention further comprises nutrients such as proteins, that positively affect the plant development.

In another preferred embodiment, the composition of the invention is characterized in that comprises proteins, preferably comprises at least 1% by weight of protein with respect to the total weight of the composition, more preferably comprises from 1% to 3% by weight of protein with respect to the total weight of the composition, and more preferably from 1% to 1.85% by weight of protein with respect to the total weight of the composition.

In the present invention, the amount of protein may be derived from the amount of total nitrogen, preferably wherein the amount of nitrogen is determined by the Dumas method. Preferably, the amount of protein is derived from the amount of total nitrogen determined by the Dumas method, where to obtain the amount of protein the determined amount of nitrogen is multiplied by the factor 5.92.

In another preferred embodiment, the composition of the invention is characterized in that comprises from 0.15% to 0.5% by weight of nitrogen (total nitrogen) with respect to the total weight of the composition.

In the present invention, the amount of nitrogen (total nitrogen) may be determined by the Dumas method.

Moreover, relevant microelements for the correct development of plants are also present in the composition of the invention such as calcium, phosphate, magnesium, iron and potassium.

So, in another preferred embodiment, the composition of the invention further comprises from 0.05% to 0.09% by weight of calcium with respect to the total weight of the composition.

In another preferred embodiment, the composition of the invention further comprises from 0.06% to 0.2% by weight of phosphate with respect to the total weight of the composition.

In another preferred embodiment, the composition of the invention further comprises from 0.2% to 0.5% by weight of potassium with respect to the total weight of the composition.

In the present invention, the amount of calcium, phosphate, magnesium, iron and potassium are determined by Inductively coupled plasma atomic emission spectroscopy (ICP-AES).

In another preferred embodiment, the composition of the invention is characterized in that is a liquid composition, preferably wherein said liquid composition comprises particles having a particle size less than 100µm.

In another preferred embodiment, the composition of the invention has an electrical conductivity lower than 15 mS/cm, preferably from 1 mS/cm to 10 mS/cm, more preferably 2.5 mS/cm. In the present invention the electrical conductivity is measured at 25°C using a conductometer.

In another preferred embodiment, the composition of the invention has a pH value ranging from 5 to 6.

According to the experiment results obtained by the inventors, the composition of the invention showed phytosanitary activity on plant pests.

So, in another preferred embodiment, the composition of the invention is a phytosanitary composition, wherein "phytosanitary" refers to compositions or substances that protects plants and/or their products from harmful organisms, such as pests and diseases.

More particularly, the composition of the invention showed the best effect against nematodes compared to a control composition.

Therefore, in another preferred embodiment the composition of the invention is a phytosanitary composition having nematicide activity, which leads to a reduction of the number of nematodes and/or a reduction of the number of nematode eggs in a plant or the environment where a plant lives. The composition of the invention leads to a 30% reduction of the number of nematodes and/or a reduction in the number of nematode eggs in a plant or the environment where a plant lives; more preferably to a 40%, 50%, 60%, 70%, 80%, 90% or 100% reduction of the number of nematodes and/or a reduction of the number of nematode eggs plant or the environment where a plant lives.

As previously exposed, the composition of the invention can be used for agricultural purposes, providing beneficial effects for plants against pests in a more sustainable way compared to agrochemicals.

Thus, in another aspect, the present invention refers to the use of the agricultural composition of the invention as a pesticide, hereinafter "the pesticidal use of the invention", preferably to the use as a pesticide in agriculture

In the present invention the term "pesticide" refers to a substance or composition that is used to control of plant pests leading to the plant protection against them, wherein plant pests are organisms that cause damage to plants. Plant pests mainly include, but are not limited to, weeds, fungi, or insects.

Plant pests may cause the death of crop plants or the reduction of its productivity, what is related to economic losses every year for the agri-food sector. The present invention provides a more sustainable alternative solution to the use of agrochemicals products in order to control pests in crop plants.

In the present invention the term "plant" refers to any living organism belonging to the kingdom plantae. Preferably, in the present invention, the plant refers to any living organism belonging to any genus/species of the kingdom Plantae. More preferably, in the present invention the plant refers to any plant that is cultivated by humans for ornamental purposes or for the production of a product of interest (e.g. for the production of fruits, tubers or a part of the plant such as the flower or its leaves). Examples of plants, preferably crop plants, include, without limitation, horticultural plants, woody plants, field crop plants, fruit plants, forage plants, or oilseed plants. More specifically, examples of crop plants include, without limitation, pepper plants, cucumber, watercress, olive, rice, apple, wheat, kiwi, corn, barley, millet, sorghum, oats, soybean, rye, alfalfa, sunflower, tobacco, potato, cotton, sweet potato, cassava, coffee, coconut, pineapple, citrus, cocoa, tea, banana, avocado, fig, guava, mango, papaya, cashew, macadamia, almond, sugar beet, sugar cane, tomato, lettuce, pea, cucurbits, cherry, vine, cucumber, conifers and grass. The plant can be at any stage of development: seed, seedling, young plant or adult plant (capable of producing fruit).

So, in another aspect, the present invention refers to the use of the agricultural composition of the invention for the control of nematodes in a plant, hereinafter "the nematicidal use of the invention".

In the present invention, the term "control of nematodes" refers to the reduction, inhibition, prevention of the accumulation and/or elimination of pathogenic nematodes or nematode eggs in a plant or plant population.

In another preferred embodiment of the nematicidal use of the invention, the nematode belongs to the genus *Meloidogyne;* more preferably the nematode is *Meloidogyne javanica.*

In another aspect, the present invention relates to a method for controlling pests in a plant, hereinafter "the method for controlling pests of the invention", wherein said method comprises applying an effective amount of the agricultural composition of the invention to the plant, to a part of the plant or its surroundings.

In the present invention the term "effective amount" refers to amount of the composition that when applied to the plant enables the desired, wherein the desired effect in the present invention is the control of pests (i.e. reduction, inhibition, prevention of the accumulation and/or elimination of pathogenic pests in a plant or plant population). As is evident to a person skilled in the art, the effective amounts may vary depending on various factors such as, for example, the type of plant, the physiological condition of the plant, meteorological conditions (for example, temperature, humidity), the stage of plant growth or the application method. The person skilled in the art knows how to calculate the effective amount to be applied based on the aforementioned factors or other factors.

In the present invention, the term "control of pests" refers to the reduction, inhibition, prevention of accumulation and/or elimination of pests in a plant or plant population.

As used herein, the term "applying" refers to the method for contacting the agricultural composition of the invention with a plant, to a part of the plant or its surroundings.

The term "plant surroundings" refers to the environment or material in which the plant is located, preferably where the surroundings of the plant comprise the conditions and/or elements for the survival of the plant. More preferably, the surroundings of the plant refer to the substrate in which the plant is located, more specifically where the underground part of the plant is located. Thus, the surroundings of the plant preferably refer to the soil, compost, mulch or plant growing medium, in which the plant is located, preferably in which the underground part of the plant is located. The surroundings of the plant may comprise a perimeter in the form of a circle with a radius of at least 10 meters, preferably 9, 8, 7, 6, 5, 4, 3, 2 meters or 1 meter. A plant's surroundings may include other items such as leaf litter, sawdust, straw, pine straw, wood chips, gravel, or other material in a bed surrounding the plant.

The agricultural composition of the invention may be applied to the soil, plant growth medium, plant root or plant seed by drenching, through the irrigation water, or by immersion of the plant root or the plant seed in the composition.

In a preferred embodiment of the method for controlling pests of the invention, the agricultural composition of the invention is applied through the irrigation water; preferably drip irrigation. Thus, in preferred embodiments of the method for controlling pests of the invention, the agricultural composition of the invention is applied in the form of liquid or formulated as a liquid.

The application of the agricultural composition of the invention may be before or after the plant of plant population is affected by pests. When the agricultural composition is applied before pests affect the plant, thus the composition exerts a prevention effect. When the agricultural composition is applied after the pests affect the plant, thus the composition exerts an effect that leads to the reduction, inhibition, prevention or elimination of pathogenic pests.

In a preferred embodiment of the method for controlling pests of the invention, the pest is a nematode.

In a more preferred embodiment of the method for controlling pests of the invention, the nematode belongs to the genus *Meloidogyne;* more preferably the nematode is *Meloidogyne javanica.*

### Examples

### Example 1. Method of obtaining an agricultural composition combining fly larvae and plant material

The leftover remains of horticultural products (organic plant material) after the preparation of the vegetables to go to the market are subjected to a fine crushing process. Once this crushing is obtained, *Hermetia illucens larvae* are added at a rate of 100 g of larvae for every 10 kg of plant remains in a digestor.

From this moment on, the larvae begin their digestion process at temperatures ranging between 28 and 35 °C. 28°C is the temperature at which the digester is maintained and the increase to 35°C is caused by the activity of the larvae themselves. With this range of temperatures and maintaining optimal aeration conditions of the sample thanks to stirring movements in the digester, within a period of 7 to 12 days the product is obtained already fully digested by the larvae.

Once this point is reached, the entire sample is crushed (using a rotor with blades) until the final concentrated product is obtained. After crushing, the sample undergoes a step of micronizing to reduce the particle size below 100µm.

The final mixture is diluted with water about 10 times to obtain a liquid composition and until a mixture with an electrical conductivity value of around 2.5 milliSiemens/cm is obtained.

The fundamental composition on which the nematicidal action of the product obtained is based is the presence of glucosamine in a higher proportion than the rest of similar existing products. In our case, glucosamine is present in a proportion that varies between 2 and 3% w/w.

### Example 2. Characterization of the agricultural composition

The liquid composition obtained in the example 1 (agricultural composition of the inventors) was characterized and comprised the following components of table 1:

**Table 1. Characterization of the agricultural composition (liquid) obtained in example 1.**

| **Composition:** | **Result:** | **Method** |
|---|---|---|
| **pH** | 5.56 | pHmeter |
| **EC a 25°^{C}** | 2.5 mS/cm | Conductometer |
| **Total Nitrogen** | 0.302 % (w/w) | Dumas method |
| **Ammonia nitrogen** | 0.043 % (w/w) | Ionic chromatography |
| **Nitric nitrogen** | 22.6 mg/Kg | Ionic chromatography |
| **Ureic Nitrogen** | < 0.1 % (w/w) | HPLC-UV |
| **Organic Nitrogen** | 0.257 % (w/w) | Method according to R.D. 1110/1991 annex Num. 12 |
| **Protein** | 1.78 % (w/w) | Derived from total nitrogen determined by Dumas method and multiplied by factor: 5.92 |
| **Total phosphorus P2O5** | 0.04 % (w/w) | ICP-AES |
| **Total Potassium K2O** | 0.226 % (w/w) | ICP-AES |
| **Total calcium CaO** | 0.059 % (w/w) | ICP-AES |
| **Total Magnesium MgO** | 0.019 % (w/w) | ICP-AES |
| **Total Glucosamine** | 2.77 % (w/w) | LC-MS/MS |

| | | |
|---|---|---|
| *HPLC-UV: High-performance liquid chromatography-ultraviolet; ICP-AES: Inductively coupled plasma atomic emission spectroscopy; LC-MS/MS: liquid chromatography-mas spectrometry; EC: electrical conductivity. The % of the different components are expressed as % of weight respect to the total weight of the composition. | | |

The product derived from biodigestion by the action of the larvae of *Hermetia illucens* (black sold fly) of organic remains from plant material also comprises the remains of the puparies/larvae of *H*. *illucens.* It is notable the content of glucosamine of natural origin from these remains of puparies that are integrated into the final mixing and preparation of the product.

The particles present in the final diluted agricultural compound have particle size of 100 microns, so that the final product can be applied by drip irrigation, which will greatly facilitate the use of it for the farmer.

### Example 3. Pest control assay

A field trial was carried out to evaluate the efficacy in the control of nematodes of the by-product resulting from the decomposition of organic material of plant origin by the larvae of the black soldier fly (*Hermetia Illucens*) (composition of example 2 obtained by the method of example 1).

Protocol of the nematode control test:

### Material and methods:

A total of 20 1.5 litre pots were prepared each using as a pink sand substrate from the Burés brand to make sure that we start from a completely nematode-free substrat and, therefore, with all treatments and repetitions in the same initial conditions.
- Pink sand Bures: 100 L.
- 20 tomato trees.
- 20 1.5 L pots. (4 theses x 5 repetitions) 20 trays to place under each pot.
- 29,600 J2 juvenile nematodes *Meloidogyne javanica.* Dose 1J2/cc of soil.
- Eriocyanin dye.
- Control: the product Reprise provided by Asfertglobal was used as control is a Solution based on Zinc and organic compounds that act as elicitors with action on the activity of the endogenous defence mechanisms of plants against external aggressions.
- Dose administered: the liquid composition obtained as in the example 1 and characterized in example 2, 300 cc of product per pot was administered.

The tests were done with the nematicide (agricultural composition) resulting from the biological synthesis from the larvae of *Hermetia illucens* digesting organic remains as in the previous examples. The nematicide has been diluted to reach the EC of 2.5 milliSiemens [mS] and was administered before and after the inoculation with the nematodes

After 15-20 days, the nematodes were inoculated at the indicated dose. Before this inoculation, the tomato plants were watered well so that after inoculation they should be without watering for about 7 days so that the inoculated nematodes are not lost through drainage. To do the inoculation we made 4 holes 3-4 cm deep around the plant and introduced the inoculum with a syringe.

The excess is eliminated by adding 20% bleach for 24 hours so that the juveniles die and it can be discarded.

In the following 40 days after inoculation, the roots were cleaned and egg masses were counted. To do this count, we cut the plant from each pot and clean the roots of each plant well by washing them in buckets of water. Once the tomato roots were obtained without substrate, we dyed them with the eriocyanin dye for 20 minutes. Once all the dyed roots were obtained, they were frozen and the egg masses and galls were then patiently counted.

### Results

The results obtained from the total count of galls in the plants produced by the nematodes and egg masses, as well as the average number of galls and egg masses per plant, are summarized in the following table (Table 2), comparing the nematicide effect of the control with the agricultural composition of the inventors (obtained in example 1 and characterized in example 2).

**Table 2. Nematicide effect results**

| **Treatment** | **Tomato plants** | **N° Total number of galls** | **Median of galls** | **Total egg** | **Median egg masses** |
|---|---|---|---|---|---|
| **Control** | 4 | 209 | 52,3 | 117 | 29.3 |
| **Agricultural composition of the inventors** | 3 | 27 | 9,0 | 14 | 4,7 |

In view of table 2, the agricultural composition obtained by the inventors showed better nematicide effects reducing the number of nematodes and eggs compared to the control product (Reprise provided by Asfertglobal). The content of glucosamine of the control product was also analysed by (LC-MS/MS), where said content of glucosamine was 0.052% w/w with respect to the total weight of the control composition.

## Claims

1. A method for obtaining an agricultural composition that comprises the following steps:
a) Adding fly larvae to a plant material,
b) Allowing the digestion of the plant material by the fly larvae of step a), and
c) Crushing the product resulting from step b).

2. Method according to claim 1, wherein the fly larvae belong to the genus *Hermetia;* preferably *Hermetia illucens.*

3. Method according to claim 1 or 2, wherein the plant material is selected from the list consisting of is selected from agricultural plant wastes, horticultural plant wastes, food plant wastes, pruning plant wastes or any combination thereof.

4. Method according to any one of claims 1 to 3, wherein the step b) is carried out at a temperature from 28°C to 35°C and wherein the step b) is carried out for 7 days to 12 days.

5. Method according to any one of claims 1 to 4, wherein the step c) further comprises micronizing after crushing.

6. Method according to any one of claims 1 to 5, further comprising a step d) of adding water to the product of step c).

7. An agricultural composition obtained by the method according to any one of claims 1 to 6.

8. The agricultural composition according to claim 7 **characterized in that** comprises at least 2% by weight of glucosamine with respect to the total weight of the composition.

9. The agricultural composition according to claim 7 or 8 **characterized in that** comprises from 2% to 5% by weight of glucosamine with respect to the total weight of the composition.

10. The agricultural composition according to any one of claims 7 to 9 **characterized in that** comprises from 1% to 3% by weight of protein with respect to the total weight of the composition.

11. The agricultural composition according to any one of claims 7 to 10, **characterized in that** comprises from 0.15% to 0.5% by weight of nitrogen with respect to the total weight of the composition.

12. The agricultural composition according to any one of claims 7 to 11 **characterized in that** is a liquid composition.

13. Use of the agricultural composition according to any one of claims 7 to 12 as a pesticide.

14. Use of the agricultural composition according to any one of claims 7 to 12 for the control of nematodes in a plant, preferably wherein the nematodes belong to *Meloidogyne javanica.*

15. Method for controlling pests in a plant, wherein said method comprises applying an effective amount of the agricultural composition according to any one of claims 7 to 12 to the plant, to a part of the plant or its surroundings.
